# EUROPEAN PATENT SPECIFICATION

(11) **EP 1 915 913 B1**
(45) Date of publication and mention of the grant of the patent: **18.11.2015**
(21) Application number: 06022153.8
(22) Date of filing: 23.10.2006
(51) Int. Cl.: A23L 1/23, A23C 9/13, A23C 9/12, A23C 9/123

(54) **Taste and flavour modulation by biotransformation in milk products**
Abstimmung von Geschmack und Aroma in Milchprodukten durch Biotransformation
Modulation du goût et de l'arôme de produits laitiers par biotransformation

(43) Date of publication of application: 30.04.2008
(73) Proprietor: Nestec S.A., 1800 Vevey (CH)
(72) Inventor: Braun, Marcel, CH-3510 Konolfingen (CH)
(74) Representative: Künzi, Sophie

(56) References cited:
- EP-A2- 1 186 244
- WO-A-2005/041675
- WO-A-2006/079420
- WO-A1-01/32905
- WO-A1-02/00845
- DE-A1- 2 362 998
- DE-C- 148 419
- GB-A- 823 556
- GB-A- 1 070 400
- JP-A- 2002 034 449
- JP-A- 2002 306 062
- US-A- 3 858 492
- US-A- 4 675 193
- US-A- 5 385 743
- AL-RUQAIE I M ET AL: "IMPROVEMENT IN THE QUALITY OF THE DRIED FERMENTED MILK PRODUCT, OGGTT" JOURNAL DAIRY RESEARCH, CAMBRIDGE, GB, vol. 54, no. 3, 1987, pages 429-435, XP000980379
- DATABASE WPI Week 200463 Derwent Publications Ltd., London, GB; AN 2004-642997 XP002422094 & CN 1 506 108 A (QI H) 23 June 2004 (2004-06-23)
- KILPI ET AL: "Angiotensin I-converting enzyme inhibitory activity in milk fermented by wild-type and peptidase-deletion derivatives of Lactobacillus helveticus CNRZ32", INTERNATIONAL DAIRY JOURNAL, ELSEVIER APPLIED SCIENCE, BARKING, GB, vol. 17, no. 8, 13 April 2007 (2007-04-13) , pages 976-984, XP022030697, ISSN: 0958-6946, DOI: DOI:10.1016/J.IDAIRYJ.2006.12.001
- GUMMALLA S ET AL: "Tryptophan Catabolism by Lactobacillus casei and Lactobacillus helveticus Cheese Flavor Adjuncts", JOURNAL OF DAIRY SCIENCE, AMERICAN DAIRY SCIENCE ASSOCIATION, US, vol. 82, no. 10, 1 October 1999 (1999-10-01), pages 2070-2077, XP026993283, ISSN: 0022-0302 [retrieved on 1999-10-01]

## Description

### Field of the invention

The present invention relates to a method for promoting natural tastes and flavours in milk-based products, to a method for manufacturing said milk products and to the products thus obtainable.

### Background of the invention

Traditionally, in the production of milk products such as cheese, butter etc., the characterising flavours are developed during fermentation of the milk source with bacteria.

In recent years, novel flavouring agents which can be added to milk products for taste improvement have been developed. These flavouring agents are traditionally obtained by treating a milk source with enzymes, microorganisms etc. For instance, a number of publications describe fermentation of a milk source with microorganisms and enzymes such as lipases, proteases etc. to produce aromas which can be isolated and used in the manufacture of flavoured milk products such as cheese, milk, fermented milk etc. Amongst these publications are CA 1220075, EP 137536, JP 2003-250482, JP 3127962, JP 5049385, JP 2002-142713, JP 5091851, JP 58043755, JP 6125733, JP 64002549, EP 1053689, EP 1186244, US 3858492, JP 74015785, JP 2004-267126, JP 6319448, US 6635303 B1, JP 80043742, JP 2005-151895, JP 30120942, JP 74015784, JP 3175978, JP 2004-236638, JP 4169166, JP 9037735, US 3975544, WO 0147366. The flavours thus obtained are described as "dairy" flavours and therefore act as flavour enhancers to dairy products.

However, there are limited reports on using a process similar to that described above in order to provide flavours distinct from "dairy" flavours such as, for example, chocolate, fruity flavours etc.

DE 23 62 998 describes a process which involves the proteolysis of a milk product with enzymes or microorganisms optionally followed by fermentation of the milk product using bacteria such as Lactobacillus or Streptococcus. This pre-treated milk product is then heated in the presence of cystein and the resulting product contains a high concentration of flavouring agent and can be dried or used as a solution of paste.

EP 1186244 describes a natural biogenerated cheese flavouring system which can be used to prepare very different cheeses having desired flavor profiles. More specifically, the cheese flavouring system comprises a sulfury-cheddar flavoured component, a creamy-buttery flavoured component, and a cheesy flavoured component. Each of these flavoured components can be used as flavour building blocks with their own specific flavour profiles and/or characteristics. Using various combinations of the flavoured components, cheeses having a wide variety of flavours can be produced. The flavoured components are separately prepared from a highly concentrated milk substrate using compositions (e.g., specific enzymes, cultures, and additives) and process conditions designed to provide the flavoured components having specific flavour profiles and/or characteristics. The flavour concentrates can be used in process cheese, process cheese-type products, or other cheeses to produce very different cheeses with desired flavour profiles. The flavour concentrates can also be used as a natural flavouring system in other food products.

WO 02/00845 describes a way to obtain chocolate-flavoured fermented products by fermenting a milk source with a mixed micro-organism culture. This method is however of limited scope in terms of the flavours obtained and in terms of the applications.

US 4,675,193 (also CA 1220075) describes a two-stage process for producing a cheese-flavored substance. A flavor development medium is fermented with a source of lipase/protease; the source of lipase/protease is inactivated and the flavor development medium is fermented by at least one lactic acid-producing microorganism which is thereafter inactivated. The source of lipase/protease is preferably a microorganism, especially Candida lypolitica ATCC 20234. The cheese-flavored substance produced by the process and foods containing the cheese-flavored substance produced by the process are also described.

US 5,385,743 describes a process for the preparation of a yoghurt flavor. The process comprising the fermentation of a whey medium comprising water and whey solids with a conventional bacterial yoghurt starter culture.

US 3,858,492 describes that the flavor of milk foodstuffs is enhanced with a good dairy flavor in a simpler way and in a shorter time by contacting the foodstuff with an enzyme-containing substance derived from a microorganism belonging to the Basidiomycetes group.

A document by Al-Ruqaie et al. (Journal of Dairy Research, Vol. 54, Issue 03, August 1987, pp 429-435) is titled "Improvement in the quality of the dried fermented milk product, oggtt". The document by Al-Ruqaie et al. describes a preparation of a dried fermented milk product wherein a pasteurised milk is fermented using a starter culture of Lactobacillus bulgaricus and Streptococcus thermophilus. The fermentation is terminated by boiling or by adding salt and the product is dried to a moisture content of less than 10 %. The final product may comprise the addition of a flavour component.

GB 823556 describes a chocolate-flavoured milk powder readily dispersible in water that is made by mechanically mixing a powder or concentrate of skim milk or whole milk and a chocolate-flavoured powder. The preparation preferably contains a sweetening agent, e.g., sucrose, dextrose, fructose, maltose or saccharine, incorporated during the mixing or afterwards. Starches, gums, carboxymethyl cellulose, lecithin may also be incorporated.

JP 2002 306062 describes a method for producing a powdered milk having a caramel taste by carrying out Maillard reaction of milk protein in cow's milk, condensed milk or butter with a vegetable oil-and-fat, a sugar, etc.

JP 2002 034449 describes a method for manufacturing powdery food material having a powder state, The method comprised the steps: sugars are heated to make caramel; to the resultant caramel, a primary dairy product is added to prepare a starting milk solution; the prepared starting milk solution is heated to brown it; the solution is cooled and subjected to spray drying to obtain spray dried powder. The obtained powdery food material can effectively impart caramel taste to various foods when it is used as a raw material for various foods

WO 2006/079420 describes a process for prepaying a dehydrated carbohydrate-containing nutritional product. The process comprises preparing a liquid concentrate with a reduced carbohydrate content, spraying the liquid concentrate into a spray-drier and incorporating the remainder of the carbohydrate content into the nutritional product by blowing solid carbohydrate particles into the spray dryer and removing the carbohydrate-containing nutritional product from the spray-drier. The process substantially reduces the problem of fouling of the spray dryer.

CN 1506108 describes a composite milk powder is prepared through obtaining juice from or crushing plant, animal and mineral materials, including fruits and vegetable; mixing with animal milk; adding vitamins, trace elements, amino acids, nucleotide, chitin and its derivative, glucose and honey; concentration, sterilizing, spray drying, sieving, cooling and packing. The composite milk powder may be eaten and made into a face mask to for a beautifying effect.

GB 1070400 describes a milk product of improved nutritive value is obtained by adding to the milk one or more essential amino acids, selected from leucine, isoleucine, valine, threonine, lysine, phenylalamine, tryptophan, and methionine, to improve the nutritive value, and monosodium glutamamte together with one or more amino acids selected from glycine, calamine, serine, and threonine, to improve the flavour and odour. The milk may be condensed or dried. DE 148419 describes a process for obtaining meat type extracts from milk by the use of enzymes to cleave peptide bonds in milk.

WO 2005/041675 describes the use of at least one bacteria producing a bacteriocin and belonging to the *Pediococcus* genus for aromatizing a milk product.

WO 01/32905 describes a process for preparing a product containing antihypertensive peptides by fermenting a casein-containing starting material with lactic acid bacteria. WO 01/32905 further describes the obtained product and its use as a functional product as such or as an ingredient or additive of edible substances.

A document by Kilpi et al. (International Dairy Journal, 2007, vol. 17, No. 8, pp. 976-984) is titled "Angiotensin I-converting enzyme inhibitory activity in milk fermented by wild-type and peptidase-deletion derivatives of Lactobacillus helveticus CNRZ32". The document by Kilpi et al. describes studies of the proteolytic system of Lactobacillus helveticus, which has a central role in the release of bioactive peptides during the fermentation of milk. The document by Kilpi et al. describes an impact of general aminopeptidase (PepN) and X-prolyl dipeptidyl aminopeptidase (PepX) activity of L. helveticus on the level of angiotensin I-converting enzyme (ACE) inhibitory activity in fermented milk.

A document by Gummalla (Journal of Dairy Science, 1999, vol. 80, No. 10, pp. 2070-2077) is titled "Tryptophan catabolism by Lactobacillus casei and Lactobacillus helveticus cheese flavor adjuncts". The document by Gummalla describes Trp catabolism by Lactobacillus casei and Lactobacillus helveticus cheese flavor adjuncts under carbohydrate starvation (pH 6.5, 30 or 37°C, no sugar) and near cheese-ripening (pH 5.2, 4% NaCl, 15°C, no sugar) conditions.

In order to achieve a variety of different, distinct flavours, artificial synthetic flavourings are normally added to the milk products. The use of artificial flavourings is quite often linked with a negative impression by the consumers.

There is thus a need to provide a wide variety of flavours in a natural way which can be used in a wide range of foods, and which thus avoids the use of artificial flavourings.

### Summary

Accordingly, the present object is achieved by means of the features of the independent claims. The dependent claims develop further the central idea of the invention.

The present invention proposes in a first aspect a method for manufacturing a milk powder-like product, the method comprising the following steps:
a. adding at least one amino acid to a milk source wherein the at least one amino acid is selected from phenylalanine, leucine, isoleucine, valine and mixtures thereof,
b. adding at least one micro-organism to the milk source wherein the micro-organism produces under fermentation conditions at least one enzyme capable of converting the amino acid,
c. fermenting the milk source, wherein additional enzymes lipase and lactase are added at the start of the fermentation or at a later stage, wherein the enzyme(s) produced by the micro-organism convert(s) the amino acid(s) into further components and
d. drying the fermented milk source in order to produce a milk powder-like product.

### Figures

The present invention is further described hereinafter with reference to some of its embodiments shown in the accompanying drawings in which:
- Fig. 1 is a flow-chart showing method steps in the production of a sweet honey flavoured milk powder
- Fig. 2 is a flow-chart showing method steps in the production of a sweet honey and cream butter flavoured milk powder

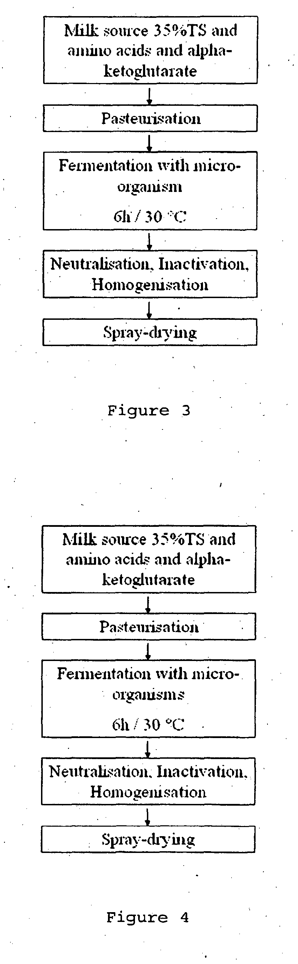

- Fig. 3 is a flow-chart showing method steps in the production of a malt and chocolate flavoured milk powder
- Fig. 4 is a flow-chart showing method steps in the production of a malt, chocolate and honey flavoured milk powder.
- Fig. 5 depicts a series of chemical reactions which may lead to compounds responsible for the honey flavour.
- Fig. 6 depicts a series of chemical reactions which may lead to compounds responsible for a cocoa and malt flavour.
- Fig. 7 depicts a chemical reaction which may lead to compounds responsible for a cocoa/coffee flavour.

### Detailed description of the invention

The present invention concerns milk powder-like products. By milk powder-like products is meant products which have the same appearance as and consistency of milk powder, are based on milk, but are produced in a different way.

The method for producing the milk powder-like product according to the invention comprises in a first step the addition of at least one amino acid to a milk source. As amino acid can be used any amino acid. The amino acid may be added to the milk source in an amount of 0.01 to 2 wt%, preferably in an amount of 0.03-1.0 wt%, more preferably 0.05-0.2 wt% on dry matter.

The milk source may be UHT-treated, pasteurised or non-pasteurised. It may be selected from milk (full fat, skimmed or semi-skimmed), fresh milk, recombined milk, cream, buttermilk, whey, milk containing vegetable fat etc. and any mixtures thereof.

If the milk source is non-pasteurised, the milk source and amino acid mixture may be pasteurised or ultra-high temperature treated or sterilised under typical conditions in the range of 70°C to 150°C over 2s to 20 min, e.g. 125°C for 20 s. Alternatively, the milk source may be heat-treated first prior to amino acid addition, or prior to treatment with a protease and/or peptidase in order to obtain at least one amino acid from the milk protein.

Optionally, L-rhamnose may be added to the milk source.

To the milk source is then added, in a second step, at least one micro-organism, wherein the micro-organism is selected for producing at least one enzyme capable of modifying the amino acid. Such enzymes are typically transamidase, decarboxylase, dehydrogenase enzymes. Other enzymes such as aldolase may also be produced. Optionally, additives such as protease and/or peptidase may be added together with the micro-organisms.

The micro-organisms used in the present method may be selected from the group consisting of *Betacoccus, Lactobacillus, Propionibacteria, Streptococcus, Bifidobacterium, Penicillium, Brevibacterium, Arthrobacter, Corynebacterium, Saccharomyces, Debaromyces, Lactococcus* and any mixtures thereof and/or mixtures of different strains of the same micro-organism. Preferably, it is a *Lactococcus lactis.* More preferably, it is a *Lactococcus lactis subsp. lactis and*/*or Lactococcus lactis subsp. lactis biovar. diacetylactis.* It may be added in the form of a living microbial starter culture or in the form of a microbial culture after cell lysis or a mixture of both.

Strains of *Lactococcus lactis* which are commercially available and which are suitable for use in the present invention are for example *Lactococcus lactis* ATCC 29146, *Lactococcus lactis subsp. lactis* DSM 4366, or still mesophilic aromatic culture (mix), type LD, F-DVS XT-313-eXact, Chr. Hansen.

Under fermentation conditions, the micro-organism produces at least some enzymes capable of converting the amino acid into further components. Additional enzymes lipase and lactase are added to the fermentation broth at the start of the fermentation or at a later stage. Typically, the fermentation is allowed to take place for about 3-24 hours at a temperature between 8 and 50°C. Preferably, the fermentation is carried out for about 6 hours at about 30°C. After fermentation, the fermentation broth may optionally be neutralized and/or inactivated and/or homogenised by methods known in the art.

Optionally, if the milk source contains L-rhamnose, it may be heated. This heating step differs from the pasteurisation step and the inactivation step in that it is typically carried out for about 90 minutes at about 90°C, in order to develop a caramel-like flavour in the mixture. Without wishing to be bound by theory, it is thought that the sugar sources in the milk basis (lactose, rhamnose etc.) undergo a number of reactions (Maillard reaction pathway) which are responsible for the caramel-like flavour. This heating step may be carried out before or after fermentation.

The fermented mixture is then dried, preferably by spray-, drying, to give a milk powder-like product. Optionally, prior to drying, the fermented mixture may be enzymatically treated with a lipase, lactase etc. This may be carried out in order to facilitate the drying step and/or to further modulate the taste and flavour of the final product. Alternatively also, the fermentation broth may be blended with further ingredients prior to drying in order to provide, upon drying, a finished product.

The present method offers the advantage that it allows a lot of variation as to the components present in the final milk powder-like product. It combines aspects of the food ripening methods known in the art, and adapts it to a new field, notably that of powders. The powders thus obtainable may be used in any food application, such as milk drinks, ice cream, chocolate, soups, dairy product, culinary product, infant formulae, health care products etc.

Another facet of the invention relates to a method for promoting a particular flavour in a milk powder-like product. The method is similar to that described above. It further allows to "tailor" the flavours obtained upon fermentation, such that a modulation in the taste of the milk powder-like product is possible.

In the present method, the micro-organism is selected in particular for its ability to produce an enzyme, the action of which, depending on the substrates, produces direct or indirect conversion products which are responsible for the particular flavour.

Thus, in a first step, an amino acid is added to a milk source. As with the other method of the present invention, the amino acid is selected from phenylalanine, leucine, isoleucine, valine and mixtures thereof. The amino acid may be present in the milk source in an amount between 0.01 and 2 wt% by weight of the milk source, preferably in an amount of 0.03-1.0 wt%, more preferably 0.05-0.2 wt% on dry matter.

In a preferred embodiment, a source of alpha-keto acid, such as alpha-ketoglutarate, alpha-ketoisocaproate, alpha-ketoisovalerate, similar amino acceptors or mixtures thereof may also be added to the milk source. Preferably, alpha-ketoglutarate is used. These naturally occurring compounds help contribute to the enzymatic pathway of the amino acid, as occurs in the subsequent steps of the present method.

The milk source may be pasteurised or non-pasteurised. It may be selected from milk (full fat, skimmed or semi-skimmed), fresh milk, recombined milk, cream, buttermilk, whey, milk containing vegetable fat etc. and any mixtures thereof.

If the milk source is non-pasteurised, the milk source and amino acid mixture, which optionally may also contain alpha-ketoglutarate, may be pasteurised or ultra high temperature treated or sterilised under typical pasteurising conditions, in the range of 70°C to 150°C over 2s to 20min, e.g. 125°C for 20s. Alternatively, the milk source may be heat-treated first prior to amino acid addition, or prior to treatment with a protease and/or peptidase in order to obtain at least one amino acid from the milk protein.

Optionally, L-rhamnose may be added to the milk source.

To the milk source is then added at least one micro-organism, wherein the micro-organism is selected for producing at least one enzyme capable of converting the amino acid, the direct or indirect conversion products procuring a particular flavour. Optionally, additives such as protease and/or peptidase may be added together with the micro-organisms.

The micro-organisms used in the present method may be selected from the group consisting of *Betacoccus, Lactobacillus, Propionibacteria, Streptococcus, Bifidobacterium, Penicillium, Brevibacterium, Arthrobacter, Corynebacterium, Saccharomyces, Debaromyces, Lactococcus* and any mixtures thereof and/or mixtures of different strains of the same micro-organism. Preferably, the micro-organism is a *Lactococcus lactis.* More preferably, it is a *Lactococcus lactis subsp*. *lactis and*/*or Lactococcus lactis subsp. lactis biovar. diacetylactis.* It may be added in the form of a living microbial starter culture or in the form of a microbial culture after cell lysis or a mixture of both.

Said micro-organisms are capable of producing enzymes such as transamidase and/or decarboxylase and/or dehydrogenase enzymes, which will act on the amino acid(s) present in the fermentation broth. Aldolase may also be produced by the micro-organism.

The fermentation broth further contains the enzymes lipase and lactase.

Under fermentation conditions, the released enzymes will react with the amino acid(s) present in the fermentation mixture to provide direct or indirect conversion products which are responsible for particular aroma. These are, for instance, from the group of 3-methyl-butanal, 2-methyl-butanal, 2-methyl-1-propanal, 2-phenylacetaldehyde, 2,3-butandione (diacetyl), 3-hydroxy-2-butaneone (acetoin), 2-phenyl-2-butenal and other phenyl-aldehydes (C10-16), benzaldehyde, 5-methyl-2-phenyl-cis-2-hexenal (cocal), 2,3,5,6-tetramethyl pyrazine, 2,4,5-trimethyl oxazole, delta-octalactone (5-octanolide), delta-decalactone (5-decanolide), delta-dodecalactone (5-dodecanolide), butanoic acid, hexanoic acid, octanoic acid, decanoic acid, dodecanoic acid, 4-hydroxy-2,5-dimethyl-3(2H)-furanone (furaneol). By phenyl-aldehydes (C10-16) is meant phenyl-aldehydes having a carbon chain of 10 to 16 carbon atoms.

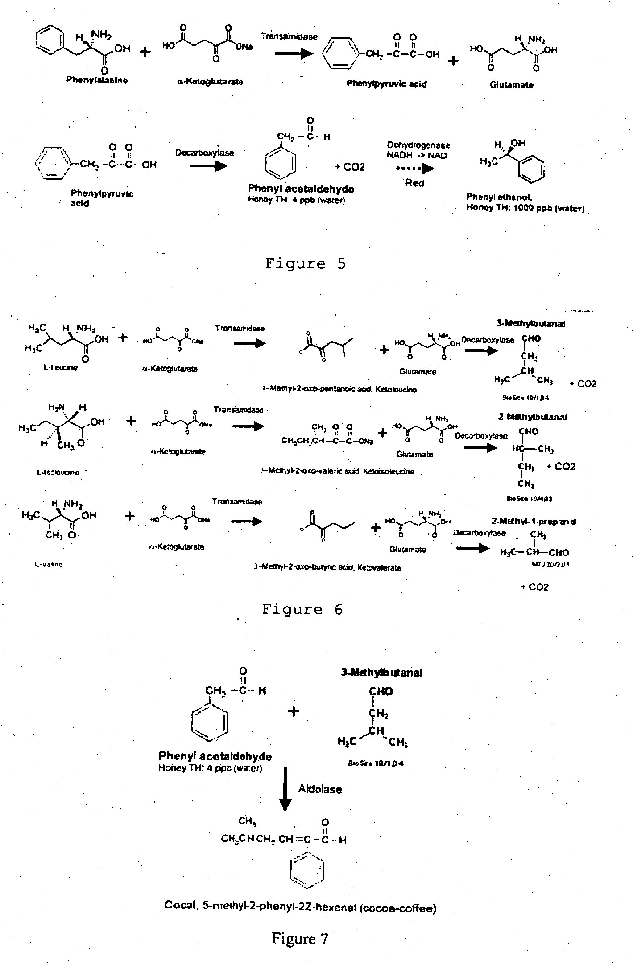

In this context, figures 5, 6 and 7 depict reaction pathways which may lead to some compounds responsible for honey flavour, for cocoa and malt flavour, or for cocoa/coffee flavour respectively. It is clear to the skilled person, that figures 5 to 7 are not illustrative of the full process and of all the reactions occurring when carrying out the methods of the invention. It is also clear that other reactions may occur during fermentation and that other compounds may be produced which provide further modulation of the flavours.

After a period of time sufficient to produce the desired compounds, typically between 2 and 24 hours, preferably between 3 and 12 hours, more preferably about 6 hours, the fermentation broth may be dried, preferably spray-dried, in order to produce a milk powder-like product having a modulated flavour profile. Alternatively, the fermentation broth may be blended with further ingredients prior to drying in order to provide, upon drying, a finished product.

Optionally, prior to drying, if the milk source contains L-rhamnose, it may be heated. This heating step differs from the pasteurisation step and the inactivation step in that it is carried out for a longer period of time. Typically, the mixture is heated for about 90 minutes at about 90°C, in order to develop a caramel-like flavour in the mixture. This heating step may be carried out before or after fermentation.

Furthermore, prior to drying, the fermentation broth may also optionally be neutralised and/or inactivated and/or homogenised by methods known in the art.

Enzymatic treatment may also optionally be carried out prior to drying the fermented mixture. Indeed, enzymes such as lipase, lactase etc. may be added in order to further modulate the flavour. For instance, further enzymatic treatment may provide a vanilla-like, cream-like flavour which imparts a creamy, mouth-coating, long-lasting taste to the final product. Furthermore, the enzymatic treatment may further improve drying properties of the fermented mixture.

In order to modulate the flavour of the milk powder-like product, the amino acid used may be chosen accordingly.

For instance, it has been found that when the amino acid selected is phenylalanine, the direct or indirect conversion products when subjected to a transamidase and/or decarboxylase and/or dehydrogenase enzyme are responsible for a honey-like flavour.

When the amino acid is selected from L-leucine, L-isoleucine, L-valine or mixtures thereof, the particular flavours obtained are those of malt and cocoa.

When rhamnose is optionally used in the starting milk basis, and the mixture before or after fermentation is heated for about 90 minutes at about 90°C, the resulting aroma is that of caramel.

Thus flavours such as honey, caramel, cocoa, malt, cream-caramel, sweet-honey cream, cocoa-cream, coffee, cream, butter, vanilla, nutty, chocolate etc. and any combination or sub-combination thereof may also be obtained by the method of the invention. Furthermore, the tastes obtained by the method of the invention may be creamy, mouth-coating, long-lasting tastes.

Thus, the present invention provides many options for the variation and modulation of milk powder-like product, whereby variation can be obtained by any combination of amino acid and/or processing conditions as described above. The variety of flavours obtainable by the method of the present invention lends itself thus to a wider range of applications.

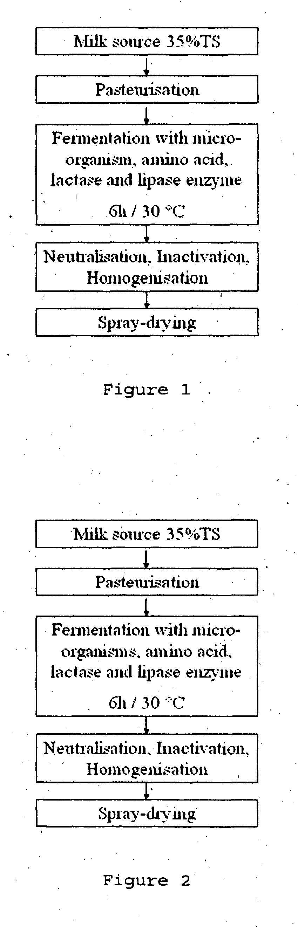

Referring to Figures 1 to 2 which represent some embodiments of the methods of the present invention, it can be seen that various flavours, in such cases sweet honey, sweet honey and cream butter, malt and chocolate, and milk, chocolate and honey flavours respectively may be obtained. The parameters which may be altered in each case, may be the amino acids, the micro-organism(s) and/or the amount thereof, for instance more than one source, the order of processing etc.

The milk powders obtainable by methods of the present invention, present the advantage that they are free of additives and the resulting milk powder-like products are thus "clean label" products. This is in contrast to traditional milk-based powders which require the addition of artificial flavouring in order to modulate their aroma.

Furthermore, the flavours are derived from biological processes, e.g. enzymatic, microbial, and are therefore naturally generated flavour compounds, or "bioflavours".

According to the invention, a milk powder-like product having a honey-cream flavour containing 0.1-3 mg of 3-methyl-butanal, 0.1-5 mg of 2-phenyl-acetaldehyde, 0.1-10 mg of diacetyl, 0.5-20 mg of acetoin, 1-100 mg of 2,3,5,6-tetramethyl pyrazine, 0.01-20 mg 2,4,5-trimethyl oxazole, 0.05-10 mg of 2-phenyl-2-butenal and other phenyl-aldehydes (C10-16), 0.1-10 mg of benzaldehyde, 10-500 mg of butanoic acid, 100-3000 mg of hexanoic acid, 100-3000 mg of octanoic acid and 50-1000 mg of decanoic acid per kg of product is provided.

Preferably, the milk-powder-like product having a honey-cream flavour contains 0.3-1.0 mg of 3-methyl-butanal, 0.5-2.5 mg of 2-phenyl-acetaldehyde, 1.0-5.0 mg of diacetyl, 1.0-10 mg of acetoin, 10-70 mg of 2,3,5,6-tetramethyl pyrazine, 0.01-15 mg 2,4,5-trimethyl oxazole, 0.1-8 mg of 2-phenyl-2-butenal and other phenyl-aldehydes (C10-16), 0.5-8.0 mg of benzaldehyde, 100-400 mg of butanoic acid, 500-2000 mg of hexanoic acid, 500-1500 mg of octanoic acid, 100-700 mg of decanoic acid per kg of product.

A milk powder-like product having a cream-butter flavour containing 0.1-50 mg of diacetyl, 0.5-20 mg of acetoin, 1-100 mg of 2,3,5,6-tetramethyl pyrazine, 0.01-20 mg 2,4,5-trimethyl oxazole, 0.1-10 mg of benzaldehyde, 10-500 mg of butanoic acid, 100-3000 mg of hexanoic acid, 100-3000 mg of octanoic acid and 50-1000 mg of decanoic acid per kg of product is also provided. Preferably it comprises 1.0-30 mg of diacetyl, 1.0-10 mg of acetoin, 15-80 mg of 2, 3, 5, 6-tetramethyl pyrazine, 0.01-15 mg 2,4,5-trimethyl oxazole, 0.5-8 mg of benzaldehyde, 50-300 mg of butanoic acid, 500-2000 mg of hexanoic acid, 4,00-2500 mg of octanoic acid and 100-700 mg of decanoic acid per kg of product.

Similarly, a milk powder-like product having a cocoa-cream and malt-cream flavour containing 0.1-10 mg 3-methyl-butanal, 0.05-10 mg 2-methyl-butanal, 0.1-10 mg diacetyl, 0.5-20 mg acetoin, 1-500 mg of 2,3,5,6-tetramethyl pyrazine, 0.01-20 mg 2,4,5-trimethyl oxazole, 0.05-10 mg of 2-phenyl-2-butenal and other phenyl-aldehydes (C10-16), 0.1-10 mg of benzaldehyde, 10-500 mg of butanoic acid, 100-3000 mg of hexanoic acid, 100-3000 mg of octanoic acid and 50-1000 mg of decanoic acid per kg of product. Preferably it comprises 0.5-5.0 mg 3-methyl-butanal, 0.1-5.0 mg 2-methyl-butanal, 1-8 mg diacetyl, 1.0-10 mg acetoin per kg of product, 1.5-300 mg of 2,3,5,6-tetramethyl pyrazine, 0.01-15 mg 2,4,5-trimethyl oxazole, 0.1-8.5 mg of 2-phenyl-2 butenal and other phenyl-aldehydes (C10-16), 0.5-8.5 mg of benzaldehyde, 50-350 mg of butanoic acid, 400-2000 mg of hexanoic acid, 400-2000 mg of octanoic acid and 100-800 mg of decanoic acid per kg of product.

A milk powder-like product having a cream-caramel flavour containing 0.1-10 mg 4-hydroxy-2,5-dimethyl-3(2H)-furanone, 10-500 mg of butanoic acid, 100-3000 mg of hexanoic acid, 100-3000 mg of octanoic acid and 50-1000 mg of decanoic acid per kg of product. Preferably, it comprises 0.5-8 mg 4-hydroxy-2,5-dimethyl-3(2H)-furanone, 20-400 mg of butanoic acid, 300-2000 mg of hexanoic acid, 300-2000 mg of octanoic acid and 100-800 mg of decanoic acid per kg of product.

The milk powder-like products of the invention typically comprise 1-20g diglycerides and 0.2-20g monoglycerides per 100g of product.

The concentrations of flavour compounds can be determined by head space adsorption to solid phase microextraction fibres, separation by gas chromatography and detection and identification by mass spectrometry. For relative quantification, the response of flavour compounds are related to the known amounts of the internal standards ethylvalerate (neutral compounds) and 4-methyloctanoic acid (acidic compounds). It is therefore clear to the skilled person that these values are not absolute values and can slightly vary depending on the type of measurements used.

It is also within the present invention to modify certain components, or mixtures of components when carrying out the processes of the invention in order to obtain perceptible organoleptic differences in the final powders. Any combination of taste and flavour modulated milk powder by blending or process combinations are included in this application.

For instance, using a mixture of the amino acids phenylalanine, leucine, isoleucine and valine, a chocolate, malt and honey flavour may be obtained. Also, it is conceivable that by adding a source of rhamnose and phenylalanine to the milk source, and heating the mixture before or after fermentation prior to drying would yield a honey-caramel flavour.

Thus, endless variations are possible and are within the grasp of a skilled person.

The milk powder-like products obtainable by the present methods, may be used as such, for example to provide flavoured milk drinks.

Moreover, they may be used in the production of other food products, such as ice cream, milk powders, chocolate-based products, dairy products, creamers, cocoa beverages, culinary products, infant formulae, health care products etc. In preferred embodiments, the taste and flavour modulated milk powder-like products are added in relatively small amounts to food products, for example 0.05 - 10 wt% for liquid, solid or powder products.

In a preferred embodiment, they may be used in the production of milk powders, by adding a milk powder-like product according to the invention to a milk powder. Depending on the amount added, the resulting product may have a strong flavour or a more subtle flavour.

In an even more preferred embodiment, the milk powder-like product according to the invention is added to a milk powder in an amount of about 0.05-10% by weight, most preferably 1-8% by weight of said milk powder.

The resulting products may thus be provided with a subtle, subliminal, distinct flavour perception.

The present invention is further illustrated hereinafter by means of non-limiting examples.

### Examples

### Example : sweet honey-cream flavoured milk powder-like product

100kg full cream milk powder is recombined with water to a final concentration of 35% dry matter. 0.1kg of L-phenylalanine is added, the pH value adjusted to 6.7 with potassium hydroxide solution and the mix preheated at 80°C and UHT treated at 125°C for 20s. After cooling to 30°C, 3kg of *Lactococcus lactis* starter and 0.07kg commercial lipase enzyme preparation is added to start the fermentation. After 10 hours at 30°C, the pH is adjusted to 6.7 with potassium hydroxide solution and 0.9kg commercial lactase enzyme preparation is added and incubated for 3 hours. After cooling to 15°C for intermediate storage, the mixture is heat treated at 80°C for 80s, homogenized and spray dried.

### Reference example 1: cocoa-cream flavoured milk powder-like product

100kg full cream milk powder is recombined with water to a final concentration of 35% dry matter. 0.1kg of L-phenylalanine, 0.1kg alpha-ketoglutaric acid, 0.1kg L-leucine, 0.1kg L-isoleucine, 0.1kg L-valine is added, the pH value adjusted to 6.7 with potassium hydroxide solution and the mix preheated at 80°C and UHT treated at 125°C for 20s. After cooling to 30°C, 3kg of a mixture of strains of *Lactococcus lactis* starter and 0.03kg commercial lipase enzyme preparation is added to start the fermentation. After 12 hours at 30°C, the pH is adjusted to 6.7 with potassium hydroxide solution. After cooling to 15°C for intermediate storage, the mixture is heat treated at 80°C for 80s, homogenized and spray dried.

### Reference example 2: analysis of flavour compounds

1.80g NaCl is weighted into a 20ml crimp top vial and a magnetic stirring bar is added. 5.50 g of sample solution containing 12% dry matter is added. 50 µl of internal standard ethylvalerate solution (45µl ethylvalerate in 100ml water) and 50 µl of internal standard 4-methyloctanoic acid solution (75µl of methyloctanoic acid in 250ml water) is added, followed by closing of the vial. The vial is then placed into a water bath at 65°C using a magnetic hot plate stirrer with contact thermometer at a speed range of about 870 rpm. After an equilibration time of 30min the fibre assembly (SPME Fibre Assemply, 2cm, 50/30µm DVB/CAR/PDMS StableFlex mounted in holder, both manufactured by SUPELCO Bellefonte, USA) is inserted by piercing the septa (depth gauge at 20mm) and by exposure the fibre completely to the headspace above the sample solution. After a sorption time of 30min the fibre is retracted and removed into the fibre assembly and out of the vial.

The fibre assembly is immediate injected into the GC injector (depth gauge at 30mm) and the separation is started by exposure of the fibre at the same time. After 5min the fibre is retracted and removed from the injector.

The flavour compounds are separated by gas chromatography on a FFAP capillary column (50m, 0.2mm inner diameter, 0.3 µm coating, Agilent Technologies USA) using helium as carrier gas and a temperature gradient from 40°C to 250°C. The separated compounds are detected and identified by mass spectrometry. Relative quantification is done by calculation of the response of flavour compounds in relation to the known amounts of the internal standards ethylvalerate (neutral compounds) and 4-methyloctanoic acid (acidic compounds).

## Claims

1. A method for manufacturing a milk powder-like product, the method comprising the following steps:
a. adding at least one amino acid to a milk source, wherein the at least one amino acid is selected from phenylalanine, leucine, isoleucine, valine and mixtures thereof,
b. adding at least one micro-organism to the milk source wh erein the micro-organism produces under fermentation conditions at least one enzyme capable of converting the amino acid,
c. fermenting the milk source, wherein additional enzymes lipase and lactase are added at the start of the fermentation or at a later stage, wherein the enzyme(s) produced by the micro-organism convert(s) the amino acid(s) into further components; and
d. drying the fermented milk source, in order to produce a milk powder-like product.

2. The method according to claim 1, for promoting a particular flavour in said milk powder-like product, wherein the direct or indirect conversion products procures said particular flavour.

3. The method according to any of the preceding claims wherein the amino acid is selected from phenylalanine, leucine, isoleucine, valine and mixtures thereof.

4. The method according to claim 3, wherein between 0.05 and 2 weight % of the amino acid is added to the milk source.

5. The method according to any of the preceding claims, wherein the milk source is selected from full fat milk, skimmed milk, semi-skimmed milk, fresh milk, recombined milk, cream, buttermilk, whey, milk containing vegetable fat and any mixtures thereof.

6. The method according to any of the preceding claims, wherein an alpha-keto acid selected from alpha-ketoglutarate, alpha-ketoisocaproate, alpha-ketoisovalerate, similar amino acceptors or mixtures thereof is added to the milk source.

7. The method according to any of the preceding claims, wherein a pasteurisation.step is carried out prior to addition of the micro-organism.

8. The method according to claim 1, wherein the micro-organism is a *Lactococcus lactis.*

9. The method according to any of the preceding claims, wherein L-rhamnose is added to the milk source.

10. The method according to any of the proceeding claims, wherein a heating step is carried out before or after fermentation.

11. The method according to any of the preceding claims, the method comprising the step of, prior to the drying, neutralising and/or inactivating and/or homogenising the fermented milk source.

12. The method according to any of the preceding claims, wherein the drying step is carried out by spray-drying.

13. The method according to any of claims 2 to 15, wherein the particular flavour is honey, caramel, cocoa, malt, cream-caramel, sweet-honey cream, cocoa-cream, coffee, cream, butter, vanilla, nutty, chocolate etc. and any combination or sub-combination thereof.

## Patentansprüche

1. Verfahren zur Herstellung eines milchpulverartigen Produktes, wobei das Verfahren die folgenden Schritte umfasst:
a. Zugabe von mindestens einer Aminosäure zu einer Milchquelle, wobei die mindestens eine Aminosäure aus Phenylalanin, Leucin, Isoleucin, Valin und Mischungen aus diesen ausgewählt ist,
b. Zugabe von mindestens einem Mikroorganismus zu der Milchquelle, wobei der Mikroorganismus unter Fermentierungsbedingungen mindestens ein Enzym produziert, das zur Umwandlung der Aminosäure geeignet ist,
c. Fermentieren der Milchquelle, wobei zusätzliche Enzyme Lipase und Laktase zu Beginn der Fermentierung oder in einem späteren Stadium zugesetzt werden, wobei das/die von dem Mikroorganismus produzierte(n) Enzym(e) die Aminosäure(n) in weitere Bestandteile umwandelt/n; und
d. Trocknen der fermentierten Milchquelle, um ein milchpulverartiges Produkt herzustellen.

2. Verfahren gemäß Anspruch 1 zur Förderung eines bestimmten Aromas in dem milchpulverartigen Produkt, wobei die direkte oder indirekte Umwandlung von Produkten dieses bestimmte Aroma herbeiführt.

3. Verfahren gemäß einem der vorhergehenden Ansprüche, wobei die Aminosäure aus Phenylalanin, Leucin, Isoleucin, Valin und Mischungen aus diesen ausgewählt wird.

4. Verfahren gemäß Anspruch 3, wobei der Milchquelle zwischen 0,05 und 2 Gew-% der Aminosäure zugesetzt werden.

5. Verfahren gemäß einem der vorhergehenden Ansprüche, wobei die Milchquelle aus vollfetter Milch, fettarmer Milch, halbfetter Milch, Frischmilch, rekombinierter Milch, Sahne, Buttermilch, Molke, Pflanzenfett enthaltender Milch sowie beliebigen Mischungen aus diesen ausgewählt ist.

6. Verfahren gemäß einem der vorhergehenden Ansprüche, wobei eine aus alpha-Ketoglutarat, alpha-Ketoisokaproat, alpha-Ketoisovalerat, ähnlichen Aminoakzeptoren oder Mischungen aus diesen ausgewählte alpha-Ketosäure der Milchquelle zugesetzt wird.

7. Verfahren gemäß einem der vorhergehenden Ansprüche, wobei ein Pasteurisierungsschritt vor der Zugabe des Mikroorganismus durchgeführt wird.

8. Verfahren gemäß Anspruch 1, wobei der Mikroorganismus aus einem *Lactococcus lactis* besteht.

9. Verfahren gemäß einem der vorhergehenden Ansprüche, wobei der Milchquelle L-Rhamnose zugesetzt wird.

10. Verfahren gemäß einem der vorhergehenden Ansprüche, wobei vor oder nach der Fermentierung ein Erhitzungsschritt durchgeführt wird.

11. Verfahren gemäß einem der vorhergehenden Ansprüche, wobei das Verfahren vor dem Trocknen den Schritt des Neutralisierens und/oder Inaktivierens und/oder Homogenisierens der fermentierten Milchquelle umfasst.

12. Verfahren gemäß einem der vorhergehenden Ansprüche, wobei der Trocknungsschritt durch Sprühtrocknen ausgeführt wird.

13. Verfahren gemäß einem der Ansprüche 2 bis 15, wobei das bestimmte Aroma aus Honig, Karamell, Kakao, Malz, Sahnekaramell, Süßhonigsahne, Kakaosahne, Kaffee, Sahne, Butter, Vanille, Nuss, Schokolade etc. sowie eine beliebige Kombination oder Unterkombination desselben besteht.

## Revendications

1. Procédé de fabrication d'un produit de type lait en poudre, le procédé comprenant les étapes suivantes :
a. ajout d'au moins un acide aminé à une source de lait, dans lequel ledit au moins un acide aminé est choisi parmi la phénylalanine, la leucine, l'isoleucine, la valine et leurs mélanges,
b. ajout d'au moins un micro-organisme à la source de lait, dans lequel le micro-organisme produit dans des conditions de fermentation au moins une enzyme capable de convertir l'acide aminé,
c. fermentation de la source de lait, dans lequel des enzymes additionnelles la lipase et la lactase sont ajoutées au début de la fermentation ou à un stade ultérieur, dans lequel l'enzyme/les enzymes produite(s) par le micro-organisme convertit/convertissent l'acide aminé/les acides aminés en d'autres composants ; et
d. séchage de la source de lait fermentée, afin de produire un produit de type poudre de lait.

2. Procédé selon la revendication 1, pour promouvoir un arôme particulier dans ledit produit de type poudre de lait, dans lequel les produits de conversion directs ou indirects procurent ledit arôme particulier.

3. Procédé selon l'une quelconque des revendications précédentes, dans lequel l'acide aminé est choisi parmi la phénylalanine, la leucine, l'isoleucine, la valine et leurs mélanges.

4. Procédé selon la revendication 3, dans lequel entre 0,05 et 2% en poids de l'acide aminé est ajouté à la source de lait.

5. Procédé selon l'une quelconque des revendications précédentes, dans lequel la source de lait est choisie parmi du lait entier, du lait écrémé, du lait demi-écrémé, du lait frais, du lait recombiné, de la crème, du babeurre, du lactosérum, du lait contenant de la matière grasse végétale et des mélanges quelconques de ceux-ci.

6. Procédé selon l'une quelconque des revendications précédentes, dans lequel un acide alpha-céto choisi parmi l'alpha-cétoglutarate, l'alpha-cétoisocaproate, l'alpha-cétoisovalérate, des accepteurs de groupe amino similaires ou leurs mélanges est ajouté à la source de lait.

7. Procédé selon l'une quelconque des revendications précédentes, dans lequel une étape de pasteurisation est effectuée avant l'ajout du micro-organisme.

8. Procédé selon la revendication 1, dans lequel le micro-organisme est un *Lactococcus lactis.*

9. Procédé selon l'une quelconque des revendications précédentes, dans lequel du L-rhamnose est ajouté à la source de lait.

10. Procédé selon l'une quelconque des revendications précédentes, dans lequel une étape de chauffage est effectuée avant ou après la fermentation.

11. Procédé selon l'une quelconque des revendications précédentes, le procédé comprenant l'étape consistant à, avant le séchage, neutraliser et/ou inactiver et/ou homogénéiser la source de lait fermentée.

12. Procédé selon l'une quelconque des revendications précédentes, dans lequel l'étape de séchage est effectuée par séchage par pulvérisation.

13. Procédé selon l'une quelconque des revendications 2 à 15, dans lequel l'arôme particulier est un arôme de miel, de caramel, de cacao, de malt, de crème caramel, de crème sucrée au miel, de crème de cacao, de café, de crème, de beurre, de vanille, de noix, de chocolat, etc. et toute combinaison ou sous-combinaison de ceux-ci.
